# EUROPÄISCHE PATENTANMELDUNG

(11) **EP 2 947 753 A1**
(43) Veröffentlichungstag der Anmeldung: **25.11.2015**
(21) Anmeldenummer: 15001474.4
(22) Anmeldetag: 15.05.2015
(51) Int. Cl.: H02K 3/12, H02K 3/50, H02P 6/00

(54) **VERFAHREN ZUM KONTROLLIEREN EINER ELEKTRISCHEN MASCHINE**

(30) Priorität: 22.05.2014 DE 102014007632
(71) Anmelder: AUDI AG, 85045 Ingolstadt (DE)
(72) Erfinder: Maiwald, Stefan, DE - 85055 Ingolstadt (DE)

(57) **Zusammenfassung**

Die Erfindung betrifft ein Verfahren zum Kontrollieren eines Betriebs einer elektrischen Maschine (4), die als Komponenten einen Stator und einen Rotor aufweist, wobei eine erste Komponente mehrere Leiterstäbe umfasst, die über Verbindungselemente mindestens einer Platine miteinander verbunden sind, wobei eine zweite Komponente Permanentmagnete umfasst, wobei die Leiterstäbe innerhalb eines Magnetfelds der Permanentmagnete angeordnet sind und eine innere Induktivität (26) aufweisen, wobei die Verbindungselemente außerhalb des Magnetfelds angeordnet sind und eine äußere Induktivität (28) aufweisen, und wobei die elektrische Maschine (4) eine Anzahl Phasen (16, 18, 20) umfasst, wobei jeweils eine der Phasen (16, 18, 20) mindestens einen der Leiterstäbe umfasst, wobei zum Kontrollieren der elektrischen Maschine (4) für jede Phase (16, 18, 20) jeweils mindestens eine elektrische Größe, die von der inneren und der äußeren Induktivität (26, 28) der jeweiligen Phase (16, 18, 20) abhängig ist, auf einen Sollwert geregelt wird.

## Beschreibung

Die Erfindung betrifft ein Verfahren zum Kontrollieren eines Betriebs einer elektrischen Maschine, ein Kontrollsystem zum Kontrollieren eines Betriebs einer elektrischen Maschine sowie eine elektrische Maschine.

Eine elektrische Maschine kann neben einem Rotor und einem Stator als Komponenten zum Kontrollieren von Phasen ein Vorschaltgerät, das als externer Schaltregler ausgebildet sein kann, einen Gleichrichter, einen Wechselrichter und/oder einen Umrichter, die wiederum als elektronische Bauteile Metall-Oxid-Halbleiter-Feldeffektransistoren (MOSFETs) oder Brücken, die Bipolartransistoren mit isolierten Gate-Elektroden (IGBT) umfassen können, aufweisen. Eine pulsweitenmodulierte (PWM) Taktung einer derartigen elektrischen Maschine kann eine Frequenz von ca. 1 kHz bis ca. 20 kHz aufweisen. Der externe Schaltregler kann bei einer Frequenz von ca. 100 kHz bis ca. 1 MHz betrieben werden.

Vor diesem Hintergrund werden ein Verfahren, ein Kontrollsystem und eine elektrische Maschine mit den Merkmalen der unabhängigen Patentansprüche vorgestellt. Ausgestaltungen des Verfahrens, des Kontrollsystems und der elektrischen Maschine gehen aus den abhängigen Patentansprüchen hervor.

Das erfindungsgemäße Verfahren ist zum Kontrollieren und somit zum Steuern und/oder Regeln eines Betriebs einer elektrischen Maschine vorgesehen. Diese elektrische Maschine weist als Komponenten einen Stator und einen Rotor auf, wobei eine erste Komponente, d. h. entweder der Stator oder der Rotor, mehrere Leiterstäbe umfasst, die über Verbindungselemente mindestens einer Platine miteinander verbunden sind. Eine zweite Komponente der elektrischen Maschine umfasst Permanentmagnete, wobei die Leiterstäbe innerhalb eines Magnetfelds der Permanentmagnete angeordnet sind und eine innere Induktivität aufweisen. Die Verbindungselemente sind dagegen außerhalb des Magnetfelds angeordnet und weisen eine äußere Induktivität auf. Die elektrische Maschine umfasst eine Anzahl Phasen, wobei jeweils eine der Phasen mindestens einen der Leiterstäbe umfasst. Zum Kontrollieren des Betriebs der elektrischen Maschine wird für jede Phase jeweils mindestens eine elektrische Größe, die von der inneren und der äußeren Induktivität der jeweiligen Phase abhängig ist, auf einen Sollwert, der für die jeweilige mindestens eine Größe der jeweiligen Phasen vorgesehen wird, geregelt.

Als die mindestens eine elektrische Größe wird eine Spannung und/oder ein Strom, die und/oder der für die jeweilige Phase gemessen wird, auf den vorgesehenen Sollwert geregelt.

Ein aktueller Istwert der mindestens einen elektrischen Größe, d. h. der Spannung und/oder des Stroms, einer jeweiligen Phase wird im laufenden Betrieb der elektrischen Maschine an einem Abgriffpunkt zwischen den Leiterstäben und den Verbindungselementen der jeweiligen Phase abgegriffen.

Der Sollwert der mindestens einen elektrischen Größe wird mit einem Algorithmus, der für die elektrische Maschine zu deren Vorsteuerung verwendet wird, in Abhängigkeit von mindestens einem mechanischen Betriebsparameter der elektrischen Maschine berechnet und/oder eingestellt. Hierbei kann als der mindestens eine mechanische Betriebsparameter eine Drehzahl der elektrischen Maschine und/oder eine Winkelposition des Rotors relativ zu dem Stator berücksichtigt werden.

Das Verfahren kann für eine elektrische Maschine durchgeführt werden, die als Elektromotor und/oder als Generator verwendet wird.

Das erfindungsgemäße Kontrollsystem ist zum Kontrollieren eines Betriebs einer elektrischen Maschine, die als Komponenten einen Stator und einen Rotor aufweist, ausgebildet. Eine erste der beiden Komponenten umfasst mehrere Leiterstäbe, die über Verbindungselemente mindestens einer Platine miteinander verbunden sind. Eine zweite der beiden Komponenten umfasst Permanentmagnete. Die Leiterstäbe sind innerhalb eines Magnetfelds der Permanentmagnete angeordnet und weisen eine innere Induktivität auf. Die Verbindungselemente sind außerhalb des Magnetfelds angeordnet und weisen eine äußere Induktivität auf. Die elektrische Maschine umfasst eine Anzahl Phasen, wobei jeweils eine der Phasen mindestens einen der Leiterstäbe umfasst. Das Kontrollsystem ist dazu ausgebildet, für jede Phase der elektrischen Maschine jeweils mindestens eine elektrische Größe, die von der inneren und der äußeren Induktivität der jeweiligen Phase abhängig ist, auf einen Sollwert zu regeln.

Außerdem umfasst das Kontrollsystem für jede Phase einen Schaltregler und eine Kontrolleinheit, die den Schaltreglern sämtlicher Phasen vorgeschaltet ist. Die Kontrolleinheit ist zur Durchführung eines Algorithmus, der für die elektrische Maschine zu deren Vorsteuerung zu verwenden ist, sowie zur Bereitstellung des Sollwerts der mindestens einen elektrischen Größe für die jeweilige Phase ausgebildet.

Außerdem umfasst das Kontrollsystem für jede Phase mindestens ein Messmodul, das dazu ausgebildet ist, einen Istwert der mindestens einen elektrischen Größe der jeweiligen Phase zu messen.

In weiterer Ausgestaltung umfasst das Kontrollsystem mindestens einen Wechselrichter, der zwischen Kontakten zu einer äußeren Spannungsquelle der elektrischen Maschine und den Phasen der elektrischen Maschine angeordnet und dazu ausgebildet ist, für den elektrische Maschine eine Schaltregelung durchzuführen. Weiterhin kann das Kontrollsystem einen Zwischenkreiskondensator aufweisen, der zwischen den beiden Kontakten angeordnet ist. Je nach Definition kann das Kontrollsystem als weitere Komponenten die Phasen des elektrische Maschine umfassen, wobei jede Phase eine innere Spannungsquelle und einen inneren Widerstand, der dem mindestens einen Leiterstab der Phase zugeordnet ist, die innere Induktivität, die innerhalb eines Magnetfelds der elektrischen Maschine angeordnet ist, und eine äußere Induktivität, die außerhalb der Magnetfelds der elektrischen Maschine angeordnet ist, aufweist. Das Kontrollsystem ist üblicherweise in einem Gehäuse der elektrischen Maschine angeordnet.

Die erfindungsgemäße elektrische Maschine umfasst als Komponenten einen Stator und einen Rotor, wobei eine erste Komponente, in der Regel entweder der Stator oder der Rotor, mehrere Leiterstäbe umfasst, die über Verbindungselemente mindestens einer Platine miteinander verbunden sind. Eine zweite Komponente, in der Regel der Rotor oder der Stator, umfasst Permanentmagnete. Die Leiterstäbe sind innerhalb eines Magnetfelds der Permanentmagnete angeordnet und weisen eine innere Induktivität auf. Die Verbindungselemente der mindestens einen Platine sind außerhalb des Magnetfelds angeordnet und weisen eine äußere Induktivität auf. Die elektrische Maschine umfasst eine Anzahl Phasen. In Ausgestaltung weist jede Phase dieselbe Anzahl an Leiterstäben auf, wobei jeweils eine der Phasen mindestens einen der Leiterstäbe umfasst. Zum Kontrollieren eines Betriebs der elektrischen Maschine ist für jede Phase der elektrischen Maschine jeweils mindestens eine elektrische Größe, die von der inneren und der äußeren Induktivität der jeweiligen Phase abhängig ist, auf einen Sollwert zu regeln.

Außerdem weist die elektrische Maschine eine Ausführungsform des beschriebenen Kontrollsystems auf und ist durch eine Ausführungsform des Verfahrens zu kontrollieren. Die Leiterstäbe der ersten Komponente der elektrischen Maschine sind üblicherweise in weichmagnetischem Material angeordnet.

Außerdem kann jede Phase eine innere Spannungsquelle, einen inneren Widerstand, der dem mindestens einen Leiterstab der jeweiligen Phase zugeordnet ist, die innere Induktivität, die innerhalb eines Magnetfelds des elektrischen Maschine angeordnet ist, und die äußere Induktivität, die außerhalb des Magnetfelds der elektrischen Maschine angeordnet ist, aufweisen.

Bei einem Betrieb des Kontrollsystems und/oder der elektrischen Maschine sind die innere und äußere Induktivität der jeweiligen Phase zur Durchführung der Schaltregelung zu nutzen, wohingegen zur Durchführung einer Funktion der elektrischen Maschine lediglich die inneren Induktivitäten der Leiterstäbe, die in dem Magnetfeld angeordnet sind, zu nutzen sind.

Weiterhin umfasst die erste Komponente der elektrischen Maschine Eisenpakete, die aus Eisenpulver als weichmagnetisches Material herzustellen sind. Diese Eisenpakete weisen Nuten auf, in denen die Leiterstäbe, die Phasen der elektrischen Maschine zugeordnet sind, angeordnet sind. Alternativ können für die erste Komponente als weichmagnetisches Material Eisenlamellen verwendet werden, in denen die Leiterstäbe zugeordnet sind. Durch Einsatz der Leiterstäbe, die im Eisenpulver eingebettet sind, können Wirbelströme reduziert und eine Schaltfrequenz der elektrischen Maschine erhöht werden.

Bei der elektrischen Maschine wird deren Wechselrichter zumindest implizit zur Schaltregelung benutzt, weshalb die elektrische Maschine für jede Phase einen integrierten Schaltregler aufweist, mit dem eine hohe Schaltfrequenz in der Größenordnung von 100 kHz bis 1 MHz erreicht werden kann.

Das Kontrollsystem der elektrischen Maschine, das einen Wechselrichter und die Schaltregler aufweist, ist in dem Gehäuse der elektrischen Maschine integriert, wodurch das Kontrollsystem hinsichtlich einer elektromagnetischen Verträglichkeit (EMV) abgeschirmt wird. Das Kontrollsystem kann als elektronische Schaltelemente Metall-Oxid-Halbleiter-Feldeffektransistoren (MOSFETs) sowie einen Zwischenkreiskondensator, bspw. einen keramischen Chipkondensator, der zwischen Kontakten des Kontrollsystems zu einer externen Spannungsquelle angeordnet ist, aufweisen.

Durch Einsatz der Leiterstäbe für die elektrische Maschine kann auf ansonsten üblichen Spulen oder Wicklungen verzichtet werden. Die Leiterstäbe bzw. leitfähige Stäbe, die die Wicklungen ersetzen, sind über Verbindungselemente der Platine, die als Leiterbahnen und/oder elektronische Bauteile ausgebildet sein können, miteinander verbunden. Durch Einbetten der Leiterstäbe in Eisenpulver als weichmagnetisches Verbundmaterial (SMC, soft magnetic composite) können Wirbelströme minimiert werden können.

Das Ersatzschaltbild jeder Phase der elektrischen Maschine umfasst eine Reihenschaltung mit einer inneren Spannungsquelle, die eine Spannung bereitstellt, deren Wert proportional zu dem Wert der Drehzahl der elektrischen Maschine ist, und den inneren Widerstand, dessen Wert einer Summe der Werte der Widerstände der Leiterstäbe, der Verbindungselemente, der MOSFETs sowie dem Ersatzwiderstand (ESR) des Zwischenkreiskondensator entspricht. Außerdem umfasst eine derartige Reihenschaltung die wirksame innere Induktivität der Leiterstäbe der jeweiligen Phase, die innerhalb des Magnetfelds angeordnet sind, das die Lorentzkraft der elektrischen Maschine bewirkt. Die Reihenschaltung umfasst zudem die äußere Induktivität der Verbindungselemente, bspw. Leiterbahnen, der Phase, die auf der mindestens einen Platine außerhalb des Magnetfelds angeordnet sind. Dabei wird für eine Funktion der Schaltregler zur Durchführung der Schaltregelung die gesamte und somit die innere und die äußere Induktivität genutzt, wohingegen für die Funktion der elektrischen Maschine nur die wirksame innere Induktivität genutzt wird. In der Regel ist die von der äußeren Spannungsquelle bereitgestellte Spannung durch als Schaltregler ausgebildete Wechselrichter aufzutrennen und jeweils einer Phase zuzuordnen, wobei die äußere Spannungsquelle auf die inneren Spannungsquellen aufzuteilen ist.

Das vorgestellte Kontrollsystem kann unter anderem eine Funktion eines Schaltreglers durchführen, mit dem eine Spannung eines Zwischenkreises eines Synchronwandlers auf einen aktuell gewünschten Istwert der Spannung der jeweiligen Phase geregelt und somit reduziert werden kann. Entsprechend kann der Strom, der durch die jeweilige Phase fließt, auf einen aktuell gewünschten Sollwert geregelt und somit reduziert werden. Zur Durchführung einer Regelung können gängige Schaltregelungsverfahren, Pulsverfahren oder sogenannte Chopper-Verfahren durchgeführt werden. Dabei entspricht eine Anzahl der Schaltregler einer Anzahl der Phasen, wobei die Schaltregler des Kontrollsystems voneinander getrennt sind. Außerdem kann jeder Schaltregler einen integrierten Schaltkreis bzw. einen Chip aufweisen.

Mit den Messmodulen, die ebenfalls voneinander getrennt sind, kann für jede Phase üblicherweise ein Istwert einer Spannung und/oder ein Istwert eines Stroms gemessen werden. Außerdem kann jeder Phase eine Endstufe sowie jeweils ein Modul zur Regelung der Spannung und des Stroms zugeordnet sein. Dabei kann ein Istwert des zu messenden Stroms bspw. durch Berechnung aus einem oder zwei gemessenen Werten des durch die jeweilige Phase fließenden Stroms ermittelt werden. Der durch das Kontrollsystem durchführbare Algorithmus kann auch als Vorsteueralgorithmus ausgebildet sein. Eine Funktion des jeweiligen Schaltreglers kann schnell ausgeführt werden, wodurch eine Wechselspannung einer jeweiligen Phase der sich drehenden elektrischen Maschine zu kontrollieren ist.

Die elektrische Maschine und somit der Elektromotor und/oder der Generator kann eine hohe Schaltfrequenz aufweisen, wodurch sich ergibt, dass ein Strom, der durch die Leiterstäbe fließt, nicht mehr konstant ist und demnach keinen eckig überlagerten Verlauf aufweist. Somit ergeben sich mit der Schaltfrequenz keine mechanischen Anregungen. Unter Berücksichtigung einer bspw. feldorientierten Regelung der elektrischen Maschine werden in Ausgestaltung ein aktuell gewünschter Sollwert der Spannung und/oder des Stroms an den Leiterstäben berechnet. Die hierbei berechneten Sollwerte können als Vorgabe zur Regelung der Spannung und/oder des Stroms der jeweiligen Phase berücksichtigt werden.

Optional kann ein Abgriff an einem Abgriffpunkt zwischen dem Strom und/oder der Spannung zwischen einem Leiterstab und somit einer inneren Induktivität sowie zwischen einem Verbindungselement der jeweiligen Platine und somit einer äußeren Induktivität physikalisch genutzt werden. Demnach kann eine Funktion zur Schaltregelung der elektrischen Maschine von einer eigentlichen Funktion der elektrischen Maschine schaltungstechnisch getrennt umgesetzt werden.

Somit sind in dem Kontrollsystem der elektrischen Maschine deren Wechselrichter und deren bspw. als Abwärts-Schaltregler ausgebildete Schaltregler miteinander kombiniert, wobei das Kontrollsystem im Gehäuse der elektrischen Maschine integriert ist. Eine der beiden Komponenten der elektrischen Maschine, die als Stator oder Rotor ausgebildet ist, weist Eisenpakete auf, die aus Eisenpulver als weichmagnetisches Verbundmaterial gebildet sind. Die Leiterstäbe, die eine ansonsten übliche Spule einer elektrischen Maschine ersetzen, begünstigen die vorgesehene Schaltregelung, da durch Einsatz der Leiterstäbe eine Anzahl von ansonsten üblichen Windungen der Spulen reduziert werden kann. Dabei ist es nicht erforderlich, Leiterbahnen als Verbindungselemente der Platinen nach schaltregeltechnischen Gesichtspunkten zu entwerfen. Die Leiterstäbe können auch in Eisenlamellen bzw. Transformatorenblechen zur Bereitstellung von weichmagnetischem Material angeordnet werden. Dabei sind in Nuten dieser Eisenpakete die Leiterstäbe angeordnet. Der Zwischenkreiskondensator zwischen Kontakten bzw. Anschlüssen des Kontrollsystems zu der äußeren Spannungsquelle bildet hier einen kleinen Zwischenkreis. Die elektrische Maschine ist üblicherweise in einem Bereich einer Betriebsspannung von z. B. 6 Volt bis 17 Volt ohne Leistungseinbußen zu betreiben. Die Drehzahl der elektrischen Maschine ist durch Erhöhung der inneren Spannung der elektrischen Maschine zu erhöhen.

Bei Durchführung des beschriebenen Verfahrens kann für die elektrische Maschine eine hohe Schaltfrequenz bzw. Taktfrequenz erreicht werden. Durch Vorsehen der Leiterstäbe kann auf ansonsten übliche Drähte, aus Kupfer, die mit Lack überzogen sind, verzichten werden. Die Leiterstäbe können aus einem beliebigen elektrisch leitfähigen Material, üblicherweise einem Metall wie Eisen, Aluminium oder Kupfer gebildet sein. Außerdem weisen die Leiterstäbe größere Durchmesser als die sonst üblichen Drähte auf. Jeweils ein Leiterstab ist abhängig von seiner Dicke entweder starr oder biegsam ausgebildet und weist einen mehreckigen oder rund geformten Querschnitt auf. Durch Einsatz der Leiterstäbe können gewissermaßen Parallelwicklungen und Dreieckschaltungen realisiert werden.

In Ausgestaltung wird zur Steigerung einer Leistung einer elektrischen Maschine, sofern diese als Elektromotor betrieben wird, eine Spannung zur Versorgung dieser elektrischen Maschine erhöht. Ein vorgesehener Zwischenkreiskondensator des Kontrollsystems kann als Keramik-Chip-Kondensator oder Folienkondensator ausgebildet sein, wodurch im Verlauf einer Spannung einer jeweiligen Phase steile Flanken mit einer minimalen Flankenbremsung erreicht werden. Außerdem ist vorgesehen, dass die inneren und äußeren Induktivitäten der Phasen nunmehr nicht nur zur Erzeugung eines Drehmoments einer als Elektromotor beschriebenen elektrischen Maschine sondern nunmehr auch zum Kontrollieren des Betriebs dieser elektrischen Maschine verwendet werden. Somit werden sowohl die Leiterstäbe, die innerhalb des weichmagnetischen Materials angeordnet sind, als auch die Verbindungselemente auf der mindestens einen Platine, die zum Verbinden der Leiterstäbe vorgesehen sind, bei hohen Takt- bzw. Schaltfrequenzen zur Durchführung einer Schaltregler-Funktion eingesetzt. Durch Einsatz der Leiterstäbe, deren Durchmesser im Vergleich zu sonst üblichen Drähten größer ist, wird ein innerer Widerstand der Phasen der ersten Komponente reduziert.

Die ansonsten üblichen Wickelköpfe von Spulen werden durch die Verbindungselemente auf der mindestens einen Platine, die in Dickschichttechnik hergestellt werden kann, ersetzt. Die vorgesehene äußere Induktivität der Verbindungselemente der mindestens einen Phase kann auch als sogenannte Planarinduktivität ausgebildet sein. Durch Einsatz eines bspw. keramischen Chipkondensators für den kleinen Zwischenkreiskondensator können zudem gute Hochfrequenzeigenschaften und ein geringer Serienwiderstand im Vergleich zu einem sonst üblichen Elektrolytkondensator mit hoher Kapazität erreicht werden. Sämtliche Komponenten der elektrischen Maschine sowie des Kontrollsystems sind üblicherweise in einem Gehäuse der elektrischen Maschine angeordnet und somit nach außen abgeschirmt. Ferner ist die elektrische Maschine, falls diese bspw. als Elektromotor eingesetzt wird, mit einer niedrigen Zwischenkreisspannung zu betreiben. Außerdem können durch die Leiterstäbe im Vergleich zu sonst üblichen Drähten hohe Ströme geleitet werden. Folglich ist es möglich, in einem weiten Spannungsbereich, in dem die elektrische Maschine betrieben wird, eine volle Leistung der elektrischen Maschine abzurufen.

Die Zwischenkreisspannung kann durch eine Regelung der Spannung ausgeregelt werden. Die erzielbaren hohen Ströme fließen nur innerhalb der elektrischen Maschine jedoch nicht außerhalb von dieser. Ferner kann die elektrische Maschine leise betrieben werden. Es ist weiterhin möglich, durch den im Rahmen des Verfahrens kontrollierten Betrieb der elektrischen Maschine eine erhöhte pulsweitenmodulierte Frequenz zu erreichen. Üblicherweise entstehen bei elektrischen Maschinen, die als kleine Hochleistungsmotoren ausgebildet sind und/oder betrieben werden, für eine Pulsweitenmodulation Hochstromspitzen, die mit dem nunmehr vorgesehenen Zwischenkreiskondensator der elektrischen Maschine zu puffern sind. Dabei ist eine Kapazität dieses Zwischenkreiskondensators umgekehrt proportional zu der besagten Frequenz. Als Zwischenkreiskondensator wird anstatt eines Elektrokondensators ein Keramik-Kondensator eingesetzt. Ferner ist es möglich, eine Spannung, die an Leiterstäben anliegt, zu reduzieren, ohne den Zwischenkreiskondensator größer ausbilden zu müssen.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt in schematischer Darstellung eine erste Ausführungsform eines erfindungsgemäßen Kontrollsystems und eine erste Ausführungsform einer erfindungsgemäßen elektrischen Maschine.
Figur 2 zeigt in schematischer Darstellung eine zweite Ausführungsform eines erfindungsgemäßen Kontrollsystems.
Figur 3 zeigt in schematischer Darstellung ein Detail einer dritten Ausführungsform eines erfindungsgemäßen Kontrollsystems.
Figur 4 zeigt in schematischer Darstellung ein Detail einer vierten Ausführungsform eines erfindungsgemäßen Kontrollsystems.

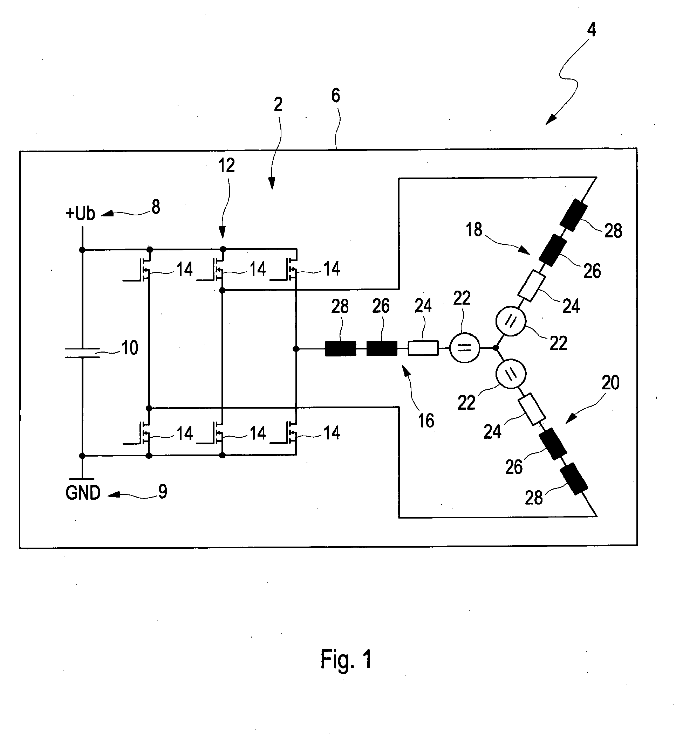

Die in Figur 1 schematisch dargestellte erste Ausführungsform des erfindungsgemäßen Kontrollsystem 2 der ersten Ausführungsform der erfindungsgemäßen elektrischen Maschine 4 ist hier komplett in einem Gehäuse 6 der elektrischen Maschine 4 angeordnet.

Das Kontrollsystem 2 und somit die elektrische Maschine 4 sind über Kontakte 8, 9 mit einer nicht weiter dargestellten äußeren Spannungsquelle verbunden, mit der hier eine Gleichspannung Ub bereitgestellt wird. Zwischen dem als Pluspol (+Ub) vorgesehenen Kontakt 8 und dem als Masse vorgesehenen Kontakt 9 ist hier ein Zwischenkreiskondensator 10 als Komponente des Kontrollsystems 2 angeordnet. Weiterhin sind die beiden Kontakte 8, 9 mit einem als Halbbrücke ausgebildeten Wechselrichter 12 des Kontrollsystems 2 verbunden. Dieser Wechselrichter 12 umfasst hier als elektronische Schaltelemente 14 sechs Metall-Oxid-Halbleiter-Feldeffektransistoren (MOSFETs). Bei der hier vorgestellten Ausführungsform des Kontrollsystems 2 und somit der elektrischen Maschine 4 ist der im Gehäuse 6 der elektrischen Maschine 4 integrierte Wechselrichter 12 zugleich als Schaltregler, in diesem Fall als Abwärts-Schaltregler, der elektrischen Maschine 4 ausgebildet.

Die elektronischen Schaltelemente 14 des Wechselrichters 12 sind hier mit drei Phasen 16, 18, 20 der elektrischen Maschine 4 verbunden, wobei jede Phase 16, 18, 20 in Figur 1 durch ihr Ersatzschaltbild schematisch dargestellt ist. Dabei umfasst jede Phase 16, 18, 20 eine innere Spannungsquelle 22, wobei ein Wert einer Spannung jeweils einer dieser Spannungsquellen 22 proportional zu einem Wert einer Drehzahl der elektrischen Maschine 4 ist. Die Drehzahl ergibt sich aus einer Frequenz, mit der sich ein Rotor der elektrischen Maschine 4 relativ zu einem Stator der elektrischen Maschine 4, die in Figur 1 nicht dargestellt sind, dreht. Jede Phase 16, 18, 20 weist hier zudem einen inneren Widerstand 24 auf, der hier einem Widerstand von Leiterstäben, die hier Wicklungen der Phasen 16, 18, 20 des Stators als erster Komponente der elektrischen Maschine 2 bilden, entspricht. Dabei sind die Leiterstäbe in Nuten von Eisenpaketen der ersten Komponente der elektrischen Maschine 4 angeordnet, wobei die erste Komponente hier als Stator der elektrischen Maschine 4 ausgebildet ist, wobei die Eisenpakete aus Eisenpulver herzustellen sind. Alternativ, d. h. gemäß einer anderen Ausführungsform könnte die erste Komponente auch als Rotor der elektrischen Maschine 4 ausgebildet sein. Weiterhin umfasst jede Phase 16, 18, 20 eine innere Induktivität 26, die der Induktivität der Leiterstäbe, die innerhalb eines Magnetfelds der elektrischen Maschine 4 angeordnet sind, entspricht sowie eine außerhalb dieses Magnetfelds angeordnete äußere Induktivität 28, die Induktivitäten der Verbindungselemente der mindestens einen Platine entspricht.

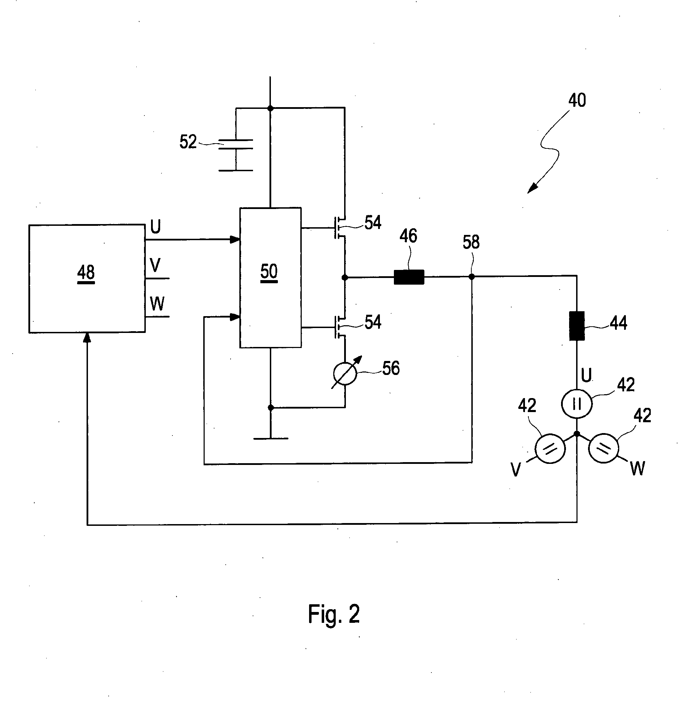

Von der zweiten Ausführungsform des Kontrollsystems 40, das zur Kontrolle einer zweiten Ausführungsform einer elektrischen Maschine ausgebildet ist, sind in Figur 2 Details dargestellt. Dabei ist vorgesehen, dass die elektrische Maschine hier drei Phasen umfasst, wobei von jeder Phase hier eine innere Spannungsquelle 42 dargestellt ist. Dabei ergibt sich bei einem Betrieb der elektrischen Maschine für eine erste Phase eine erste Spannung U, für eine zweite Phase eine zweite Spannung V sowie für eine dritte Phase eine dritte Spannung W. Außerdem zeigt Figur 2 eine innere Induktivität 44, die sich jeweils mindestens für einen Leiterstab einer Phase ergibt. Eine äußere Induktivität 46 jeweils einer Phase der elektrischen Maschine ergibt sich durch Verbindungselemente auf mindestens einer Platine der elektrischen Maschine, wobei die Leiterstäbe über diese elektrischen Verbindungselemente miteinander leitend verbunden sind.

Als Komponenten des Kontrollsystems 40 sind in Figur 2 eine Kontrolleinheit 48 sowie einer von insgesamt drei Schaltreglern 50 dargestellt, wobei jeweils einer der Phasen ein derartiger Schaltregler 50 zugeordnet ist. Weiterhin sind jeweils einem der insgesamt drei Schaltregler 50 ein Zwischenkreiskondensator 52, zwei elektronische Schaltelemente 54 sowie ein Messmodul 56 zugeordnet, das hier dazu ausgebildet ist, einen Strom, der durch mindestens einen Leiterstab jeweils einer Phase fließt, zu messen. Ferner zeigt Figur 2 einen Abgriffpunkt 58, an dem eine Spannung, die zwischen der inneren Induktivität 44 und der äußeren Induktivität 46 der jeweiligen Phase angeordnet ist, abzugreifen ist. Dabei wird ein Istwert der an diesem Abgriffpunkt 58 gemessenen Spannung von dem Abgriffpunkt 58 dem jeweiligen Schaltregler 50 übermittelt.

Weiterhin werden hier als mechanische Betriebsparameter der elektrischen Maschine ein aktueller Winkel eines Rotors der elektrischen Maschine relativ zu einem Stator der elektrischen Maschine sowie eine aktuelle Drehzahl der elektrischen Maschine ermittelt und hier ausgehend von einem Knotenpunkt zwischen den Spannungsquellen 42 zu der Kontrolleinheit 48 übermittelt. Mit der Kontrolleinheit 48 können unter Berücksichtigung der aktuellen Werte der mechanischen Betriebsparameter und der Induktivitäten 44, 46 sowie unter Nutzung eines Algorithmus für die elektrische Maschine Sollwerte für die Spannungen U, V, W der drei Phasen ermittelt und an einen jeweiligen Schaltregler 50 übermittelt werden.

Der in Figur 2 explizit dargestellte Schaltregler 50 ist hier der ersten Phase zugeordnet, für deren Spannung U der ermittelte Sollwert einzustellen ist. Entsprechend ist von der Kontrolleinheit 48 ein Sollwert einer Spannung V für die zweite Phase einem Schaltregler 50, der der zweiten Phase zugeordnet ist, und ein Sollwert einer Spannung W einer dritten Phase einem dritten Schaltregler 50, der der dritten Phase zugeordnet ist, zu übermitteln.

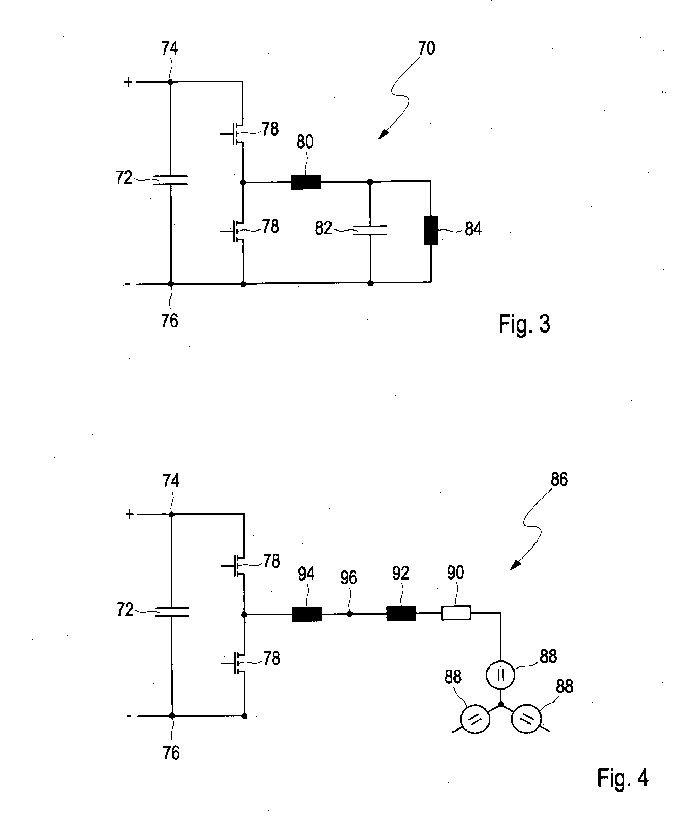

Das in Figur 3 dargestellte Detail der dritten Ausführungsform des Kontrollsystems 70 umfasst hier einen Zwischenkreiskondensator 72, der hier zwischen einem als Pluspol ausgebildeten Kontakt 74 und einem als Minuspol ausgebildeten Kontakt 76 einer externen Spannungsquelle angeordnet ist. Weiterhin sind dem Zwischenkreiskondensator 72 sowie den beiden Kontakten 74, 76 elektronische Schaltelemente 78 nachgeschaltet, die jeweils einer Phase von mehreren Phasen einer elektrischen Maschine, die durch das Kontrollsystem 70 zu kontrollieren ist, nachgeschaltet sind. Außerdem zeigt Figur 3 eine äußere Induktivität 80 dieser elektrischen Maschine sowie eine innere Kapazität 82 und einen inneren Widerstand 84 der jeweiligen Phase der elektrischen Maschine. Hierbei ist vorgesehen, dass jede Phase der elektrischen Maschine Leiterstäbe aufweist, die über mindestens eine Platine, hier über Verbindungselemente, die auf der Platine angeordnet sind, miteinander verbunden sind. Dabei entspricht die gezeigte äußere Induktivität 80 der Induktivität der Verbindungselemente der mindestens einen Platine. Die innere Kapazität 82 sowie der innere Widerstand 84 entsprechen der Kapazität und dem Widerstand der Leiterstäbe der jeweiligen Phase. Die in Figur 3 dargestellten Komponenten sind hier zugleich als Komponenten eines Synchronwandlers des Kontrollsystems 70 ausgebildet.

Das in Figur 4 schematisch dargestellte Detail der vierten Ausführungsform des Kontrollsystems 86 umfasst ebenfalls einen Zwischenkreiswiderstand 72 sowie elektronische Schaltelemente 78, die jeweils einer Phase einer elektrischen Maschine, die durch dieses Kontrollsystem 86 zu kontrollieren ist, vorgeschaltet sind. Auch hier ist vorgesehen, dass die elektrische Maschine mehrere, nämlich hier drei Phasen aufweist. Dabei umfasst jede Phase Leiterstäbe, die über Verbindungselemente mindestens einer Platine der elektrischen Maschine vorgeschaltet sind. Im Detail zeigt Figur 4 weiterhin drei Spannungsquellen 88, wobei jeweils einer Phase eine dieser Spannungsquellen 88 zugeordnet ist. In Figur 4 ist zudem ein innerer Widerstand 90 der Leiterstäbe der jeweiligen Phase sowie eine innere Induktivität 92 der Leiterstäbe dieser Phase dargestellt. Außerdem zeigt Figur 4 eine äußere Induktivität 94 der Verbindungselemente der mindestens einen Platine der jeweiligen Phase. Zwischen der inneren Induktivität 92 sowie der äußeren Induktivität 94 ist ein Abgriffpunkt 96 angeordnet, über den für eine jeweilige Phase ein aktueller Istwert eines Stroms, der durch die Phase fließt und/oder ein aktueller Istwert einer an der jeweiligen Phase anliegenden Spannung abzugreifen ist.

## Patentansprüche

1. Verfahren zum Kontrollieren eines Betriebs einer elektrischen Maschine (4), die als Komponenten einen Stator und einen Rotor aufweist, wobei eine erste Komponente mehrere Leiterstäbe umfasst, die über Verbindungselemente mindestens einer Platine miteinander verbunden sind, wobei eine zweite Komponente Permanentmagnete umfasst, wobei die Leiterstäbe innerhalb eines Magnetfelds der Permanentmagnete angeordnet sind und eine innere Induktivität (26, 44, 92) aufweisen, wobei die Verbindungselemente außerhalb des Magnetfelds angeordnet sind und eine äußere Induktivität (28, 46, 80, 94) aufweisen, und wobei die elektrische Maschine (4) eine Anzahl Phasen (16, 18, 20) umfasst, wobei jeweils eine der Phasen (16, 18, 20) mindestens einen der Leiterstäbe umfasst, wobei zum Kontrollieren der elektrischen Maschine (4) für jede Phase (16, 18, 20) jeweils mindestens eine elektrische Größe, die von der inneren und der äußeren Induktivität (26, 28, 44, 46, 80, 92, 94) der jeweiligen Phase (16, 18, 20) abhängig ist, auf einen Sollwert geregelt wird.

2. Verfahren nach Anspruch 1, bei dem als die mindestens eine elektrische Größe eine Spannung auf den Sollwert geregelt wird.

3. Verfahren nach Anspruch 1 oder 2, bei dem ein Istwert der mindestens einen elektrischen Größe einer jeweiligen Phase (16, 18, 20) zwischen den Leiterstäben und den Verbindungselementen der jeweiligen Phase (16, 18, 20) abgegriffen wird.

4. Verfahren nach einem der voranstehenden Ansprüche, bei dem als die mindestens eine elektrische Größe ein Strom auf den Sollwert geregelt wird.

5. Verfahren nach einem der voranstehenden Ansprüche, bei dem der Sollwert der mindestens einen elektrischen Größe mit einem Algorithmus, der für die elektrische Maschine (4) zu deren Vorsteuerung verwendet wird, in Abhängigkeit von mindestens einem mechanischen Betriebsparameter der elektrischen Maschine (4) eingestellt wird.

6. Verfahren nach Anspruch 5, bei dem als der mindestens eine mechanische Betriebsparameter eine Drehzahl der elektrischen Maschine (4) und/oder eine Winkelposition des Rotors relativ zu dem Stator berücksichtigt wird bzw. werden.

7. Verfahren nach einem der voranstehenden Ansprüche, das für eine elektrische Maschine (4) durchgeführt wird, die als Elektromotor und/oder als Generator verwendet wird.

8. Kontrollsystem zum Kontrollieren eines Betriebs einer elektrischen Maschine (4), die als Komponenten einen Stator und einen Rotor aufweist, wobei eine erste Komponente mehrere Leiterstäbe umfasst, die über Verbindungselemente mindestens einer Platine miteinander verbunden sind, wobei eine zweite Komponente Permanentmagnete umfasst, wobei die Leiterstäbe innerhalb eines Magnetfelds der Permanentmagnete angeordnet sind und eine innere Induktivität (26, 44, 92) aufweisen, wobei die Verbindungselemente außerhalb des Magnetfelds angeordnet sind und eine äußere Induktivität (28, 46, 80, 94) aufweisen, und wobei die elektrische Maschine (4) eine Anzahl Phasen (16, 18, 20) umfasst, wobei jeweils eine der Phasen (16, 18, 20) mindestens einen der Leiterstäbe umfasst, wobei das Kontrollsystem (2, 40, 70, 86) dazu ausgebildet ist, für jede Phase (16, 18,20) der elektrischen Maschine (4) jeweils mindestens eine elektrische Größe, die von der inneren und der äußeren Induktivität (26, 28, 44, 46, 80, 92, 94) der jeweiligen Phase (16, 18, 20) abhängig ist, auf einen Sollwert zu regeln.

9. Kontrollsystem nach Anspruch 8, die für jede Phase (16, 18, 20) einen Schaltregler (50) aufweist.

10. Kontrollsystem nach Anspruch 9, das eine Kontrolleinheit (48) aufweist, die den Schaltreglern (50) vorgeschaltet ist und zur Durchführung eines Algorithmus, der für die elektrische Maschine (4) zu deren Vorsteuerung zu verwenden ist, sowie zur Bereitstellung des Sollwerts der mindestens einen elektrischen Größe für die jeweilige Phase (16, 18, 20) ausgebildet ist.

11. Kontrollsystem nach einem der Ansprüche 8 bis 10, das für jede Phase (16, 18, 20) mindestens ein Messmodul (56) aufweist, das dazu ausgebildet ist, einen Istwert der mindestens einen elektrischen Größe der jeweiligen Phase (16, 18, 20) zu messen.

12. Kontrollsystem nach einem der Ansprüche 8 bis 11, das einen Wechselrichter (12) aufweist, der zwischen Kontakten (8, 9, 74, 76) zu einer äußeren Spannungsquelle der elektrischen Maschine (4) und den Phasen (16, 18, 20) der elektrischen Maschine (4) angeordnet und dazu ausgebildet ist, für die elektrische Maschine (4) eine Schaltregelung durchzuführen.

13. Kontrollsystem nach Anspruch 12, die einen Zwischenkreiskondensator (10, 72) aufweist, der zwischen den beiden Kontakten (8, 9, 74, 76) angeordnet ist.

14. Kontrollsystem nach einem der Ansprüche 8 bis 13, das in einem Gehäuse (6) der elektrischen Maschine (4) angeordnet ist.

15. Elektrische Maschine, die als Komponenten einen Stator und einen Rotor aufweist, wobei eine erste Komponente mehrere Leiterstäbe umfasst, die über Verbindungselemente mindestens einer Platine miteinander verbunden sind, wobei eine zweite Komponente Permanentmagnete umfasst, wobei die Leiterstäbe innerhalb eines Magnetfelds der Permanentmagnete angeordnet sind und eine innere Induktivität (26, 44, 92) aufweisen, wobei die Verbindungselemente außerhalb des Magnetfelds angeordnet sind und eine äußere Induktivität (28, 46, 80, 94) aufweisen, und wobei die elektrische Maschine (4) eine Anzahl Phasen (16, 18, 20) umfasst, wobei jeweils eine der Phasen (16, 18, 20) mindestens einen der Leiterstäbe umfasst, wobei zum Kontrollieren eines Betriebs der elektrischen Maschine (4) für jede Phase (16, 18, 20) der elektrischen Maschine (4) jeweils mindestens eine elektrische Größe, die von der inneren und der äußeren Induktivität (26, 28, 44, 46, 80, 92, 94) der jeweiligen Phase (16, 18, 20) abhängig ist, auf einen Sollwert zu regeln ist.

16. Elektrische Maschine, die ein Kontrollsystem (2) nach einem der Ansprüche 8 bis 14 aufweist und durch ein Verfahren nach einem der Ansprüche 1 bis 7 zu kontrollieren ist.

17. Elektrische Maschine nach einem der Ansprüche 15 oder 16, bei der die Leiterstäbe der ersten Komponente in weichmagnetischem Material angeordnet sind.
